Europäisches Patentamt

European Patent Office

Office européen des brevets

(19)

(11) EP 1 398 813 A2

(12) **EUROPEAN PATENT APPLICATION**

(43) Date of publication:
17.03.2004 Bulletin 2004/12

(51) Int Cl.$^7$: **H01J 5/16**, H01J 17/16

(21) Application number: 03255346.3

(22) Date of filing: 28.08.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **10.09.2002 JP 2002264237**

(71) Applicant: **Fujitsu Hitachi Plasma Display Limited Kawasaki-shi, Kanagawa 213-0012 (JP)**

(72) Inventors:
• **Chiaki, Yutaka, Fujitsu Hitachi Plasma Displ. Ltd. Kawasaka-shi Kanagawa 213-0012 (JP)**

• **Ishigaki, Masaji, Fujitsu Hitachi Plasma Dis.Ltd. Kawasaka-shi Kanagawa 213-0012 (JP)**
• **Koike, Masaaki, Fujitsu Hitachi Plasma Dis.Ltd. Kawasaka-shi Kanagawa 213-0012 (JP)**

(74) Representative: **Williams, Michael Ian et al Haseltine Lake Imperial House 15-19 Kingsway London WC2B 6UD (GB)**

(54) **Gas discharge display device**

(57)    An optical fim (102a) of an optical filter portion (102) as a component of a gas discharge display device (100) has an absorption region for selectively absorbing a light between 550 nm of wavelength and 620 nm of wavelength. A transmittance of an absorption peak within the absorption region is within a range of 20% to 60% of an average transmittance in a visible light region.

FIG. 1

EP 1 398 813 A2

**Description**

The present invention relates to a gas discharge display device for generating gas discharge by using a gas containing at least either neon or helium so as to conduct display of a color image.

Recently, a gas discharge display device provided with an optical filter for selectively absorbing a light of an emission wavelength of a gas among visible lights has been developed (for example, see patent documents 1 to 5 and non-patent documents 1 and 2). Especially, in order to increase a color reproduction range, such a gas discharge display device provided with the optical filter whose transmission characteristic has an absorption peak within a range of 550 nm to 620 nm of wavelength is proposed (for example, see patent document 1).

[Patent Document 1]
Japanese Patent Laid-open No. 2000-284704
[Patent Document 2]
Japanese Patent Laid-open No. 2000-11901
[Patent Document 3]
Japanese Patent Laid-open No. 2001-13877
[Patent Document 4]
Japanese Patent Laid-open No. 2001-166708
[Patent Document 5]
Japanese Patent Laid-open No. 2002-137290
[Non-patent Document 1]
T.Kosaka, N. Iwase, S. Fujimoto, T. Masuda, K. Ohira, M. Amatsu, F. Namiki, M. Ishigaki, H. Ohtaka, Y. Kimura, J. Okayasu, N. Matsui, K. Umehara, T. Kishi, K. Kariya, H. Ohki, K. Irie; Development of a Hi-Dimension 32-in. PDP, SID 01 Intl, pp.1224-1227, 2001., and
[Non-patent Document 2]
K. Irie, F. Namiki, K. Kariya, H. Inoue, T. Ando, T. Harada, T. Nakamura, Y. Shinagawa; IDW '00, pp.1173-1174, 2000.

However, according to the aforementioned gas discharge display device, the smaller the transmittance of the optical filter is, the better the contrast ratio becomes, while there is a problem of reduction in brightness.

It is desirable to provide a gas discharge display device for realizing prevention of reflection of an external light due to illumination and improvement of a contrast ratio while increasing the color reproduction range without reducing brightness (luminance).

A gas discharge display device according to an aspect of the present invention comprises: a gas discharge display portion for generating gas discharge by using a gas containing at least either neon or helium, and for displaying a color image by making a first, a second, and a third phosphor having different light-emitting colors emit light; and an optical filter portion provided to overlap an entire display screen on a front surface of a gas discharge space, wherein the optical filter portion includes an absorption region for selectively absorbing a light between 550 nm of wavelength and 620 nm of wavelength, and a width $W_H$ in the absorption region of a half-width transmittance $T_H$ ($T_H = (T_p + T_v) / 2$) between a transmittance $T_p$ at an absorption peak in the absorption region and an average transmittance $T_v$ in a visible light region is 30 nm or more.

Another aspect of a gas discharge display device of the present invention comprises: a gas discharge display portion for generating gas discharge by using a gas containing at least either neon or helium, and for displaying a color image by making a first, a second, and a third phosphor having different light-emitting colors emit light; and an optical filter portion provided to overlap an entire display screen on a front surface of a gas discharge space, wherein the optical filter portion includes an absorption region for selectively absorbing a light between 550 nm of wavelength and 620 nm of wavelength, and a transmittance Tp at an absorption peak in the absorption region is within a range of 20% to 60% of an average transmittance $T_v$ in a visible light region.

A gas discharge display device according to another aspect of the present invention comprises: a gas discharge display portion for generating gas discharge by using a gas containing at least either neon or helium, and for displaying a color image by making a first, a second, and a third phosphor having different light-emitting colors emit light; and an optical filter portion provided to overlap an entire display screen on a front surface of a gas discharge space, wherein the optical filter portion includes an absorption region for selectively absorbing a light between 550 nm of wavelength and 620 nm of wavelength, and an average transmittance $T_{AC}$ between 550 nm of wavelength and 620 nm of wavelength is within a range of 60% to 85% of an average transmittance $T_V$ in a visible light region.

Preferred features of the present invention will now be described, purely by way of example, wich reference to the accompanying drawings, in which:

Fig. 1 is a cross sectional view showing a schematic configuration of a gas discharge display device according to the present embodiment;

Fig. 2A and Fig. 2B are cross sectional views showing another example of the gas discharge display device according to the present embodiment;

Fig. 3 is an exploded perspective view showing an inner structure of a display panel of the gas discharge display device according to the present embodiment;

Fig. 4 is a characteristic chart showing emission spectrums of blue display, green display and red display in the gas discharge display portion;

Fig. 5 is a characteristic chart showing an emission spectrum when blue phosphors, green phosphors, and red phosphors emit light at the same time, that is, when white display has been made;

Fig. 6 is a characteristic chart showing an emission spectrum of a two-component gas of neon and xenon;

Fig. 7 is a characteristic chart showing emission spectrums of typical light-emitting lamps for illumination commercially available for general households;

Fig. 8 is a characteristic chart showing effect of visual appreciation;

Fig. 9 is a characteristic chart showing an example (characteristic 1) of a transmission characteristic of an optical film according to the present embodiment;

Fig. 10 is a characteristic chart showing an example (characteristic 2) of a transmission characteristic of the optical film as a comparative example of the present embodiment;

Fig. 11 is a characteristic chart showing an example (characteristic 3) of a transmission characteristic of the optical film according to the present embodiment;

Fig. 12 is a characteristic chart showing an example (characteristic 4) of a transmission characteristic of the optical film according to the present embodiment;

Fig. 13 is a characteristic chart showing a relationship between a region width for absorption and luminance in which brightness of the gas discharge display device is compared;

Fig. 14 is a characteristic chart showing a relationship between a region width for absorption and a contrast ratio in which a contrast ratio of the gas discharge display device is compared;

Fig. 15 is a characteristic chart showing a relationship between the region width for absorption and red chromaticity when only the red phosphors emit light in the gas discharge display portion of the gas discharge display device;

Fig. 16 is a characteristic chart showing an example (characteristic 5) of a transmission characteristic of the optical film according to the present embodiment;

Fig. 17 is a characteristic chart showing an example (characteristic 6) of a transmission characteristic of the optical film according to the present embodiment;

Fig. 18 is a characteristic chart showing a relationship between a ratio ($T_V / T_P$) of an average transmittance $T_V$ to a-transmittance $T_P$ at an absorption peak and luminance in which brightness of the gas discharge display device is compared;

Fig. 19 is a characteristic chart showing a relationship between the ratio ($T_V / T_P$) of the average transmittance $T_V$ to the transmittance $T_P$ at the absorption peak and the contrast ratio in which the contrast ratio of the gas discharge display device is compared;

Fig. 20 is a characteristic chart showing a relationship between the ratio ($T_V / T_P$) of the average transmittance $T_V$ to the transmittance Tp at the absorption peak and red chromaticity when only the red phosphors emit light in the gas discharge display portion of the gas discharge display device; and

Fig. 21 is a chromaticity diagram showing a color reproduction range corresponding to the transmission characteristic of Fig. 9.

A concrete embodiment of the present invention will be explained in detail hereinafter with reference to the drawings.

- Schematic Configuration of Gas Discharge Display Device-

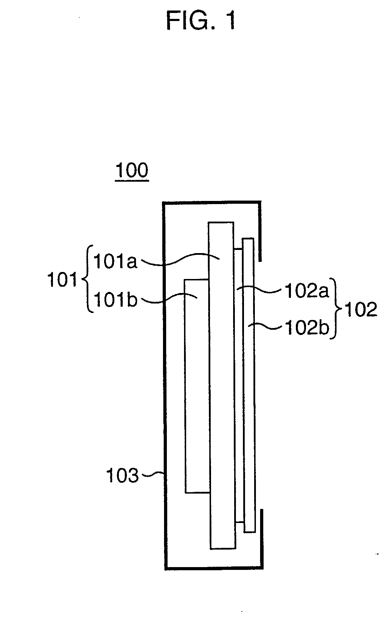

Fig. 1 is a cross sectional view showing a schematic configuration of a gas discharge display device according to the present embodiment.

A gas discharge display device 100 is structured by providing with a gas discharge display portion 101 for displaying a color image, an optical filter portion 102 for selectively absorbing a light of an emission wavelength of a gas among visible lights, and an external cover portion 103 for storing the gas discharge display portion 101 and the optical filter portion 102 so as to show a display surface thereof.

The gas discharge display portion 101 is structured by providing with a display panel 101a for displaying an image by gas discharge, and a drive circuit 101b for lighting cells of the display panel 101a according to display contents.

The optical filter portion 102 is structured by providing with an optical film 102a having a spectral transmission characteristic specific to the present invention as is described later, and a front surface board 102b for protecting the display panel 101a of the gas discharge display portion 101, being a substrate of the optical film 102a. The front surface board 102b is transparent to the visible lights, and is composed of an electromagnetic wave shield film, an infrared ray removing film, and an anti-reflection film by surface treating. Glass, acrylic resin, polycarbonate, or the like is suitable for materials of the front surface board 102b.

The optical filter portion 102 has a size to spread over an entire screen which is an assembly of cells of red, green, and, blue in the gas discharge display portion 101, and tightly coheres with a front surface of the display panel 101a. As a method for forming the optical film 102a, there are methods for applying a film on which a filter film is layered, for applying a film in which a pigment or a dye is dispersed, for laying a multilayered interference film by a thin film technology, and the like. The optical film 102a may be directly applied or layered on a front surface of the display portion 101a, or superposed on the display panel 101a by forming on the front surface board 102b. Optical transmission characteristics of the optical film 102a and the front surface board 102b are uniform throughout the entire screen.

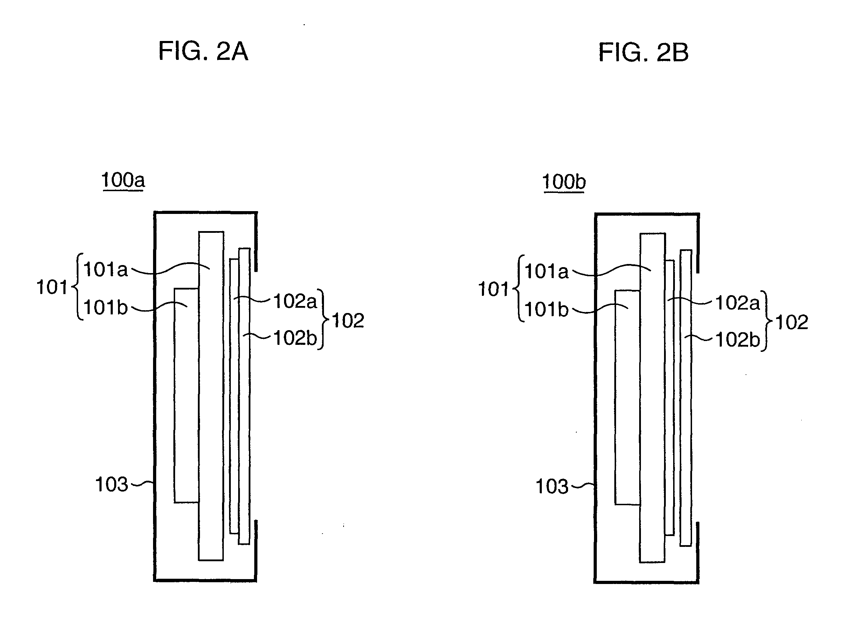

Fig. 2A and Fig. 2B are cross sectional views showing another example of the gas discharge display device according to the present embodiment.

In a gas discharge display device 100a of Fig. 2A, the optical film 102a is disposed by tightly cohering with a back side of the front surface board 102b, and by alienating from the display panel 101a. This structure has an advantage that a great effect on prevention from damage of the gas discharge display portion 101 can be obtained because the front surface board 102b absorbs shock from outside. Furthermore, by utilizing an interstice between the display panel 101a and the optical filter portion 102 (the front surface board 102b with the optical film 102a) as a pass for air, and by circulating outside air or cooling air by a cooling fan or the like, an effect for restraining temperature increase of the gas discharge display portion 101 itself is expected.

In a gas discharge display device 100b of Fig. 2B, the optical film 102a is disposed by tightly cohering with the display panel 101a and by alienating from the optical film 102a so as to improve a protection effect of the front surface board 102b.

In the three disposition examples described above, a position of the optical film 102a is between the display panel 101a and the front surface board 102b, however, the optical film 102a may be disposed on a front side of the front surface board 102b. Furthermore, the optical film 102a may be disposed in any position as long as it is a front surface of a light-emitting portion of the display portion 101a. For example, the optical film 102a may be formed in an inner portion of the display portion 101a.

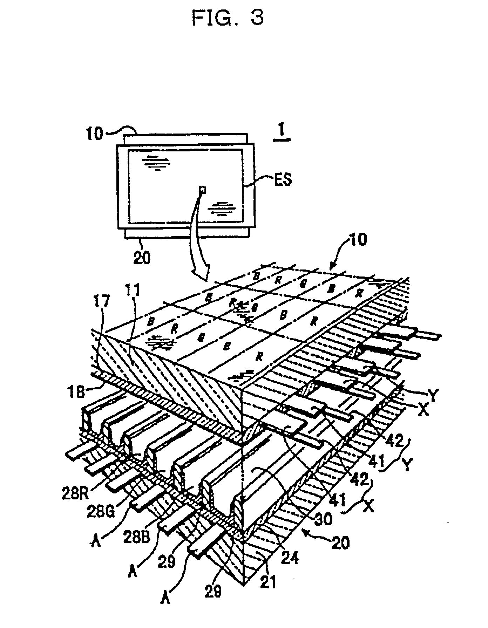

Fig. 3 is an exploded perspective view showing an inner structure of a display panel 1 of the gas discharge display device according to the present embodiment.

The display panel 1 has a three-electrode surface-discharge structure in which a first main electrode X and a second main electrode Y constituting a pair of electrodes for generating discharge for sustaining illumination are disposed in parallel, and in which the main electrodes X and Y cross address electrodes A serving as third electrodes in respective cells (display elements). The main electrodes X and Y extend along the line direction (a horizontal direction) of a screen. The second main electrode Y is used as a scan electrode for selecting cells in a line unit. The address electrodes A extend in a column direction (a vertical direction) and are used as data electrodes for selecting cells in a column unit. A display portion is a range where the main electrodes and the address electrodes intersect.

In the display panel 1, a pair of the main electrodes X and Y is disposed in every line inside a glass substrate 11 as a base material of an assembly 10 which serves as a front panel substrate. The line is a column cell in the horizontal direction in the screen.

The main electrodes X and Y are respectively composed of transparent electroconductive films 41 and metal films (bus conductors) 42, and covered with a dielectric layer 17 having a thickness of approximately 30 μm made of a low-melting glass. A protective film 18 having a thickness of several hundreds nm made of magnesia (MgO) is provided on a surface of the dielectric layer 17. The address electrodes A are arranged inside a glass substrate 21 as a base material of an assembly 20 which serves as a back panel substrate, and are covered with a dielectric layer 24 having a thickness of approximately 10 μm. Barrier ribs 29 which are straight belt-shaped in plain view, each having a height of 150 μm, are provided between the address electrodes A on the dielectric layer 24. The barrier ribs 29 divide discharge spaces 30 in every subpixel (a unit emission region) along the line direction and define a size of interstices of the discharge spaces 30. Red phosphors 28R, green phosphors 28G, and blue phosphors 28B for color display are disposed in a pattern to repeatedly line up along the line direction to cover an inner surface of the back panel, including regions above the address electrodes A and on side surfaces of the barrier ribs 29. Materials of these phosphors 28R, 28G, and 28B are selected so as to reproduce white color when they emit light with maximum luminance. Their forming shapes are all the same. A preferred example of the materials of the phosphors is shown in the table 1 described below.

Table 1

| Light-emitting color | Phosphor |
|---|---|
| R | $(Y, Gd)BO_3:Eu$ |
| G | $Zn_2SiO_4:Mn$ |
| B | $BaMgAl_{10}O_{17}:Eu$ |

In the discharge spaces 30, a discharge gas in which neon as a main ingredient is mixed with xenon (4% to 5%) is filled. The respective phosphors 28R, 28G, and 28B are locally excited by ultraviolet rays released by xenon during discharge to emit light. In the gas discharge display device 1 of the present embodiment, a color balance of R, G, and B can be adjusted according to characteristics of the optical film 102a. Therefore, there is no need to strictly select the materials of the phosphors or to adjust the shapes of the phosphors in every color in order to optimize the color balance.

One pixel (a pixel) for display is constituted by three subpixels having different light-emitting colors arranged in the line direction. An assembly in each subpixel is a cell. Since the barrier ribs 29 are arranged in a stripe pattern, all the portions corresponding to respective columns among the discharge spaces 30 extend over the lines and are continuous over a row direction. As interstices between neighboring electrodes in a line, a value which is fully larger than a surface discharge gap (for example, a value within a range of 80 μm to 140 μm) and which can prevent discharge coupling in the column direction (for example, a value within a range of 400 μm to 500 μm) is adopted. Address discharge is generated between the main electrode Y in cells to be lighted (in the case of a write address format) or in cells not to be lighted (in the case of an erase address format) and the address electrode A so that a charged state is formed in each line where only the cells to be lighted have an appropriate quantity of electric charge. Then, surface discharge is generated along the substrate surface in the cells to be lighted by applying voltage Vs for sustaining illumination between the main electrodes X and Y.

Incidentally, a structure for completely separating respective cells may be adopted by using lattice-shaped ribs instead of the aforementioned stripe ribs.

- Various Characteristics of Optical Filter Portion-

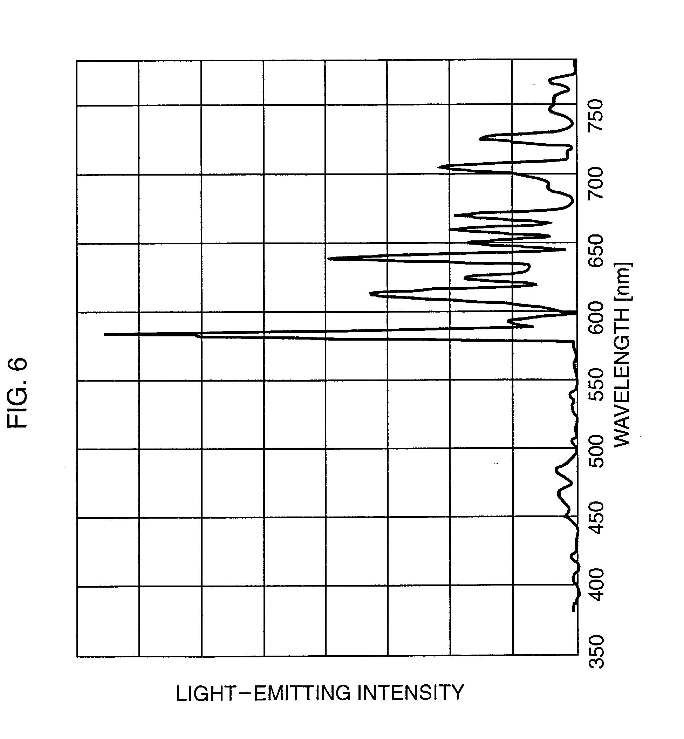

Various characteristics of the optical film 102a constituting a main composition of the optical filter portion 102 will be explained hereinafter. In the following explanation, an Ne - Xe (4%) penning gas, which emits light having the spectral distribution shown in Fig. 6, is used as a discharge gas. However, any gas containing helium (He) or Krypton (Kr) is applicable to a discharge gas regardless of whether neon is contained or not.

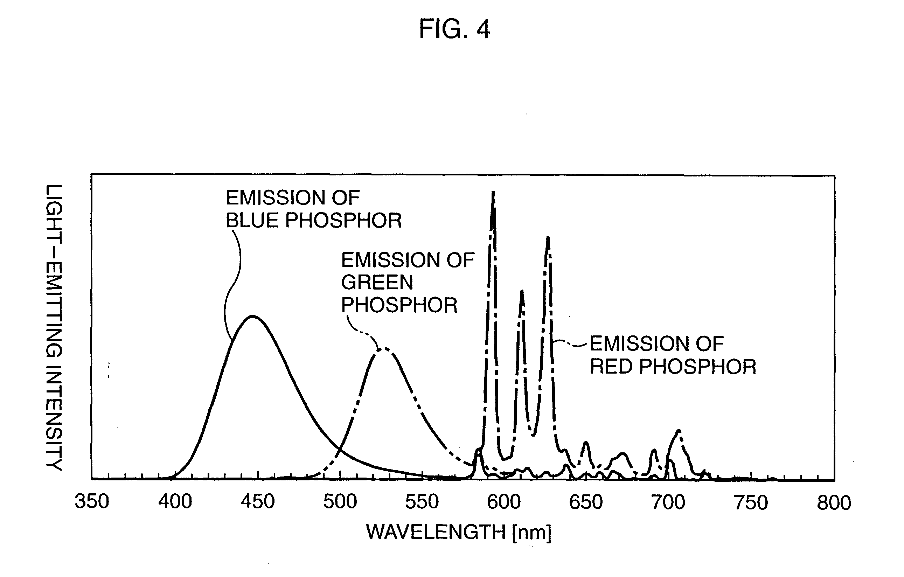

Fig. 4 is a characteristic chart showing emission spectrums of blue display, green display and red display in the gas discharge display portion 101.

When only the blue phosphors (third phosphors) 28B emit light, their emission spectrum has a peak at 445 nm. When only the green phosphors (first phosphors) 28G emit light, their emission spectrum has a peak at 525 nm within a range of 523 nm to 538 nm. When only the red phosphors (second phosphors) 28R emit light, their emission spectrum has three peaks at three wavelengths respectively at 595 nm within a range of 589 nm to 595 nm, at 610 nm within a range of 607 nm to 613 nm, and 625 nm within a range of 623 nm to 629 nm.

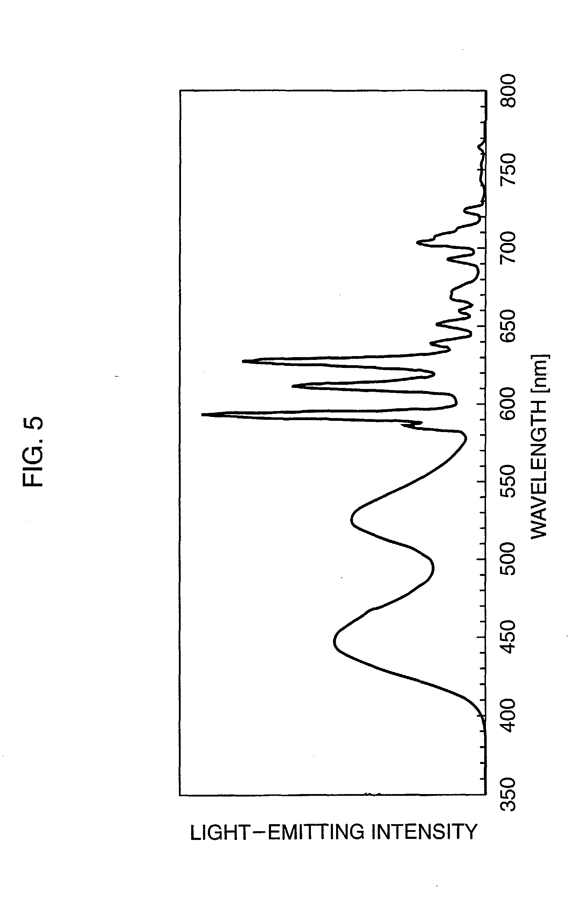

Fig. 5 is a characteristic chart showing an emission spectrum when the blue phosphors, the green phosphors, and the red phosphors emit light at the same time, that is, when white display has been made.

Peak values of light-emitting intensity and their wavelengths of the white display are the same as those of the aforementioned blue display, green display, and red display.

Supposing that light-emission brightness in a display panel of a gas discharge display portion is Lo, that transmittance of the optical filter portion 102 is T, that illuminance of an external light by illumination on a front surface of the optical filter portion is S, and that a reflective degree-in the display panel is R, a daylight contrast ratio is expressed as the following formula.

```
Contrast ratio

= Light-emission brightness of a display portion

after transmitting an optical filter portion /

luminance of an external reflected light
```

$$= (LoT + S / (\pi RT^2)) / (S / (\pi RT^2))$$

$$= (Lo + S / (\pi RT)) / (S / (\pi RT))$$

$$= Lo / (S / (\pi RT)) + 1$$

Here, it is found out that, supposing that a reflective degree R and illuminance of the external light S are constant, the larger the light-emission brightness Lo is, and the smaller the transmittance T is, the larger the contrast ratio (the daylight contrast ratio) is in the gas discharge display device under illumination.

However, it is found out that the smaller the transmittance T is, the smaller the intensity (brightness of the gas discharge display device) of the light emitted by the display portion and transmitted through the optical filter portion is. In other words, it is found out that luminance of the gas discharge display device is large if the transmittance T of the optical film is large. It is also found out that making the daylight contrast ratio of the gas discharge display device large has a contrary relationship with making luminance large.

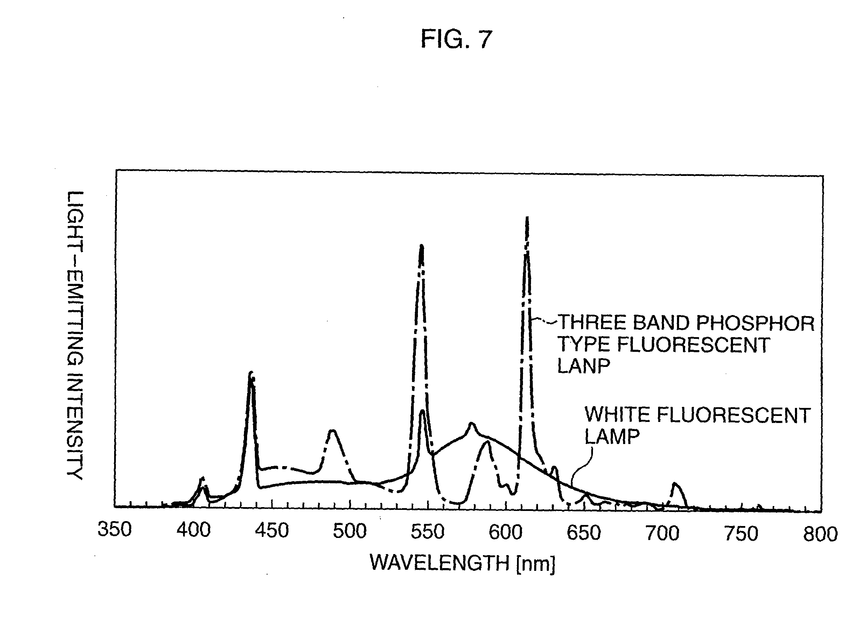

Fig. 7 is a characteristic chart showing emission spectrums of typical light-emitting lamps for illumination commercially available for general households.

In the case of a three band phosphor type fluorescent lamp in the emission spectrums of the light-emitting lamps for illumination, light-emitting intensity is large at 430 nm to 440 nm, 480 nm to 500 nm, 535 nm to 560 nm, 575 nm to 600 nm and 605nm to 635 nm. In the case of a white fluorescent lamp, light-emitting intensity is large at 430nm to 440 nm and 540 nm to 630 nm or thereabouts. Among them, especially, intensification of light-emitting intensity can be seen at 545 nm to 555 nm and 570 nm to 580 nm.

By reducing a transmittance in an entire region of a visible light wavelength region of the optical film, the external light by illumination can be absorbed. In addition to the above, the optical film can efficiently absorb the external light by selectively reducing the transmittance of a predetermined wavelength interval whose light-emitting intensity of fluorescent lamps for illumination is large.

In the emission spectrums of white display shown in Fig. 5, the optical film can efficiently transmit the light emitted by the display portion by selectively increasing the transmittance of a wavelength region whose light-emitting intensity is large when the blue phosphors, the green phosphors, and the red phosphors emit light, for example, the range of 420 nm to 480 nm, 510 nm to 540 nm, and 580 nm to 640 nm.

Furthermore, in the emission spectrum of white display shown in Fig. 5, the wavelength region of 580 nm to 600 nm shows discharge by a gas containing helium, Krypton or neon. By reducing the transmittance of this region, color purity of respective colors can be improved to increase a color reproduction region when the blue phosphors, the green phosphors, and the red phosphors emit light.

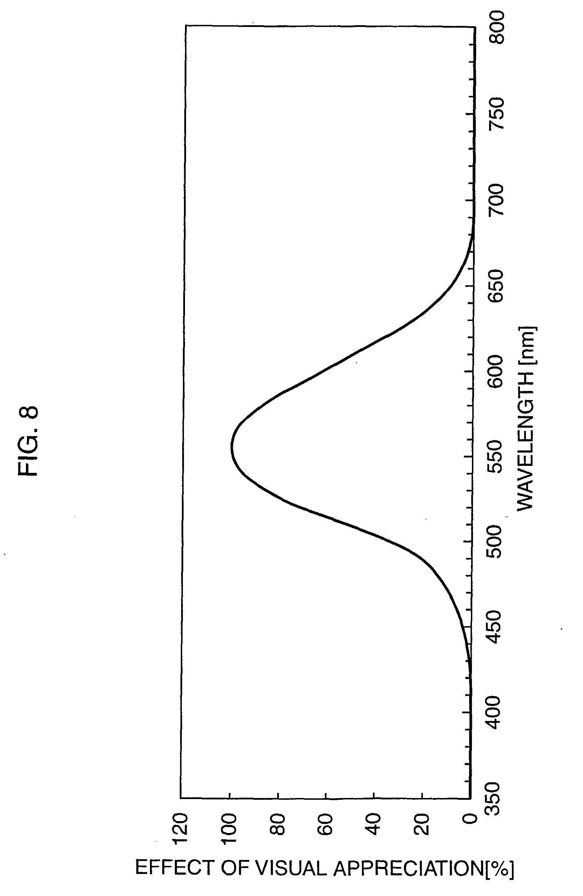

Fig. 8 is a characteristic chart showing effect of visual appreciation.

Most people feel the most brightness at approximately 555 nm. When the transmittance of the optical film is reduced at a region of around 555 nm being a center, the external light is efficiently absorbed and the contrast ratio becomes large. However, the light emitted by the display portion is also absorbed, and therefore, brightness of the gas discharge display device is reduced.

As described above, reduction of the transmittance within the region of 480 nm to 510 nm of wavelength and of 550 nm to 620 nm of wavelength in a transmission characteristic of the optical film can realize an increase in the contrast ratio without reducing brightness of the gas discharge display device, in other words, an increase in the intensity of the light emitted by the display portion and transmitted through the optical filter portion and reduction of a reflection intensity of the external light. Furthermore, it is found out that reduction of the transmittance within the region of 480 nm to 510 nm of wavelength and 550 to 620 nm of wavelength can increase the color reproduction region.

The inventors of the present invention focused the attention on a transmittance $T_P$ at an absorption peak in an absorption region for selectively absorbing the light between 550 nm of wavelength and 620 nm of wavelength and an average transmittance $T_V$ in a visible light region. By defining an average value thereof (a half-width transmittance $T_H = (T_P + T_V) / 2$) as a certain value or more, a color reproduction range is made possible to be increased while maintaining the high contrast ratio without reducing brightness (luminance). As is described later, a width $W_H$ of the half-width transmittance $T_H$ is proposed to be 30 nm or more in consideration of adjusting the contrast ratio, luminance, or color reproducibility without sacrificing any of the above three factors.

Incidentally, it is suitable to adjust the optical filter portion so that the half-width region width in the transmittance $T_{550}$ at the wavelength of 550 nm and the transmittance $T_{620}$ at the wavelength of 620 nm is 20 nm or more.

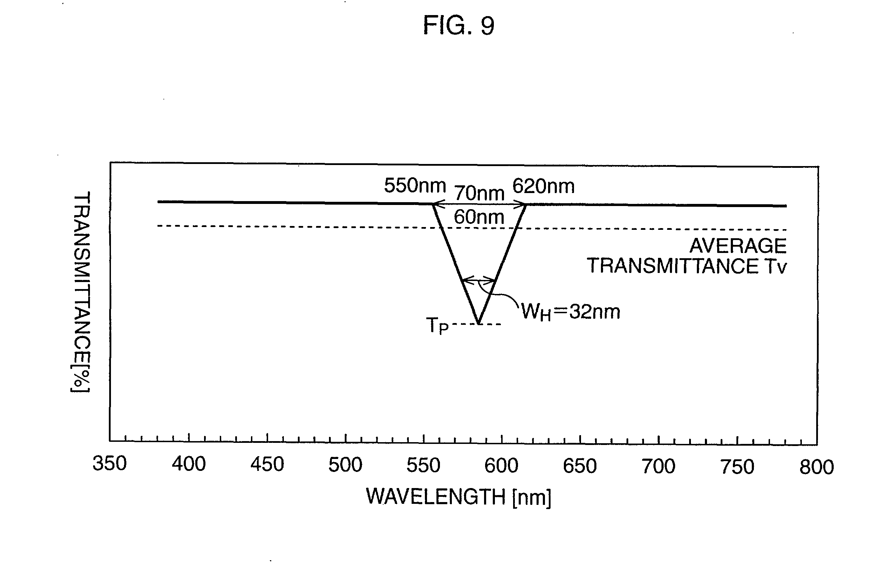

Fig. 9 is a characteristic chart showing an example (characteristic 1) of a transmission characteristic of the optical film according to the present embodiment.

The characteristic 1 has such characteristics , that a selectively absorbing range is from 550 nm to 620 nm of wavelength, that the region width for absorption is 70 nm, and that the absorption peak (a largely absorbing wavelength) is at 585 nm. The width $W_H$ of a half-width transmittance $T_H$ is 32 nm. In this case, in a comprehensive manner, the three factors of the contrast ratio, the luminance, and the color reproducibility are evaluated as excellent.

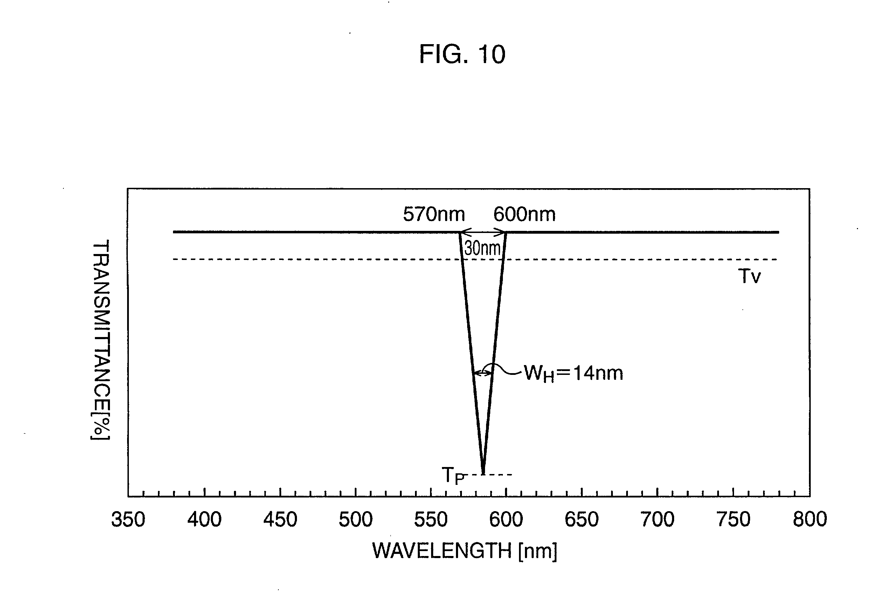

An example (characteristic 2) of a transmission characteristic of the optical film is shown in Fig. 10 as a comparative example 1 of the present embodiment.

The characterist 2 has such characteristics that the selectively absorbing range is from 570 nm to 600 nm of wavelength, that the region width for absorption is 30 nm, and that the absorption peak is at 585 nm. The width $W_H$ of a half-width transmittance $T_H$ is 14 nm. In this case, the contrast ratio is high, but the brightness (luminance) is small, which cannot be considered as practically excellent.

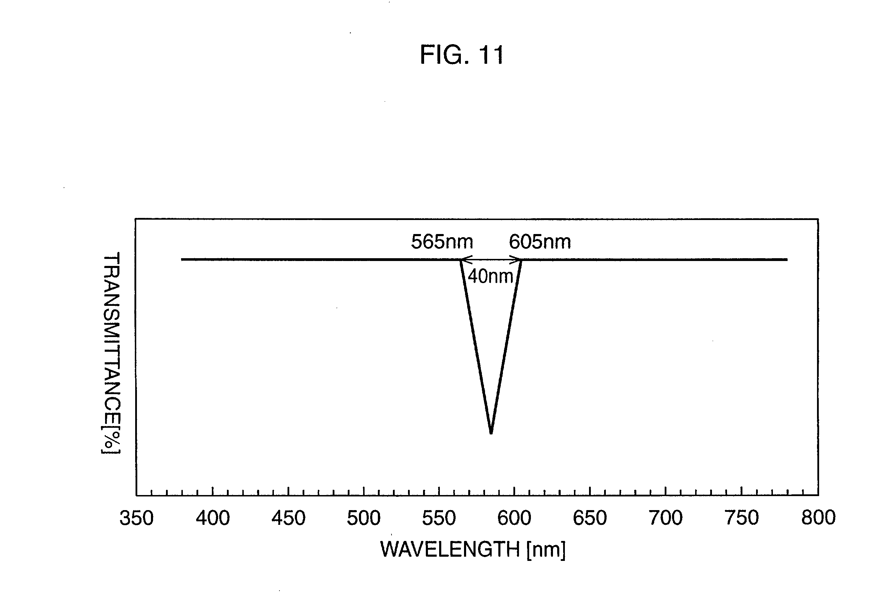

Subsequently, an example (characteristic 3) of a transmission characteristic of the optical film is shown in Fig. 11 as a comparative example 2 of the present embodiment.

The characteristic 3 has such characteristics that the selectively absorbing range is from 565 nm to 605 nm of wavelength, that the region width for absorption is 40 nm, and that the absorption peak is at 585 nm. The average transmittance $T_V$ in the visible light region is the same as that of the characteristic 2. The width $W_H$ of the half-width transmittance $T_H$ is 18 nm. In this case, in a comprehensive manner, the contrast ratio, the luminance and the color reproducibility cannot be considered as excellent.

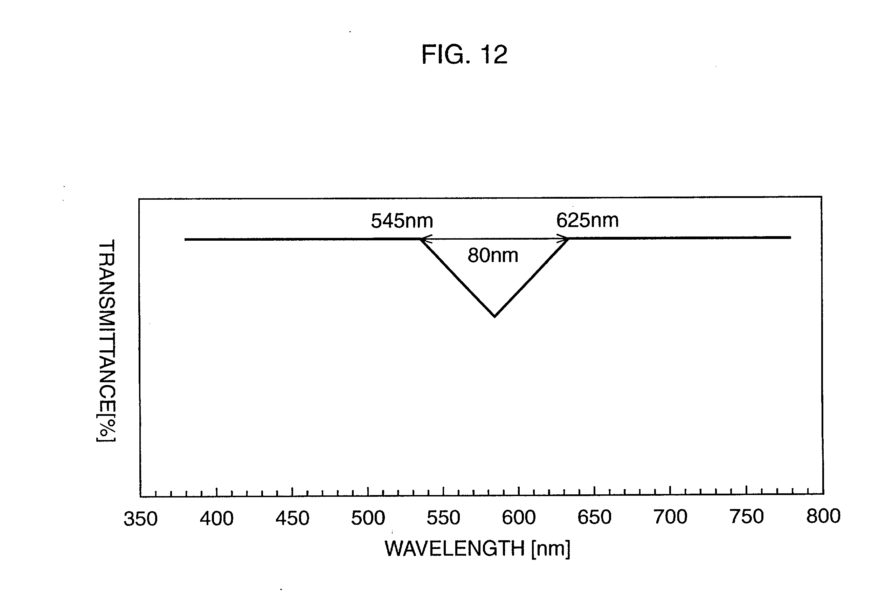

Fig. 12 is a characteristic chart showing an example (characteristic 4) of a transmission characteristic of the optical film according to the present embodiment.

The characteristic 4 has such characteristics that the selectively absorbing range is from 545 nm to 625 nm of wavelength, that the region width for absorption is 80 nm, and that the absorption peak is at 585 nm. The average transmittance $T_V$ in the visible light region is the same as that of the characteristic 2. The width $W_H$ of a half-width transmittance $T_H$ is 36 nm. In this case, in a comprehensive manner, the three factors of the contrast ratio, the luminance, and the color reproducibility are evaluated as excellent.

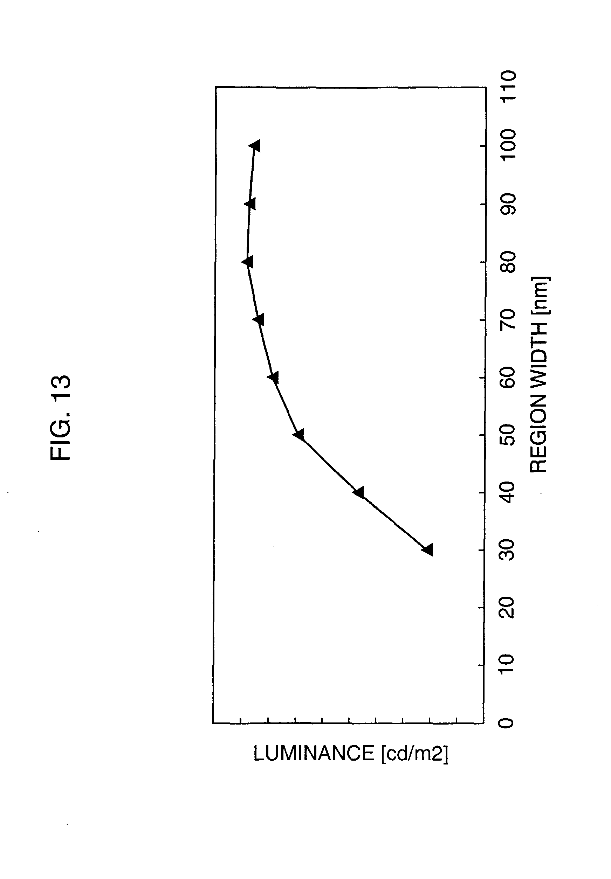

Fig. 13 is a characteristic chart showing a relationship between a region width for absorption and luminance in which brightness of the gas discharge display device is compared.

Here, as shown in the characteristics 3 and 4, the average transmittance $T_v$ of the optical film in the visible light region and a region except the selectively absorbing region are constant at a predetermined transmittance. Brightness of the gas discharge display device is compared when the region width W for absorption is changed for approximately every 5 nm at the wavelength of 585 nm as the center which is a peak of emission of light by neon. Fig. 13 tells that the more increased the wavelength interval is, the brighter the brightness of the gas discharge display device is when the region width W for absorption is between 30 nm and 50 nm. Fig. 13 also tells that, however, a ratio of the brightness is small even if the wavelength interval is increased when the region width W for absorption exceeds 50 nm or above, and that the gas discharge display device is the brightest when the wavelength interval is 80 nm.

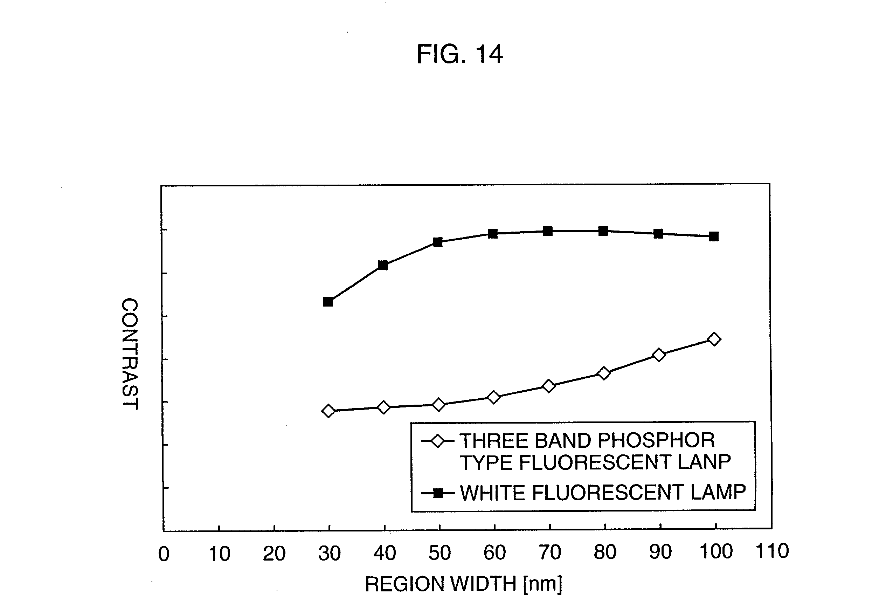

Fig. 14 is a characteristic chart showing a relationship between a region width for absorption and a contrast ratio in which the contrast ratio of the gas discharge display device is compared.

Here, the contrast ratio of the gas discharge display device by the optical film is compared with the transmission characteristic when the gas discharge display device is irradiated at predetermined illuminance with the three band phosphor type fluorescent lamp and the white fluorescent lamp and when the region width W for absorption is selectively changed as well as in Fig. 13. Fig. 14 tells that, when a light source of the external light is the three band phosphor type fluorescent lamp and when the region width for absorption is large, the contrast ratio of the gas discharge display device is also large. Fig. 14 also tells that when the light source thereof is the white fluorescent lamp, the region width for absorption is almost the same when the wavelength interval W is between 50 nm and 90 nm, and the contrast ratio becomes high.

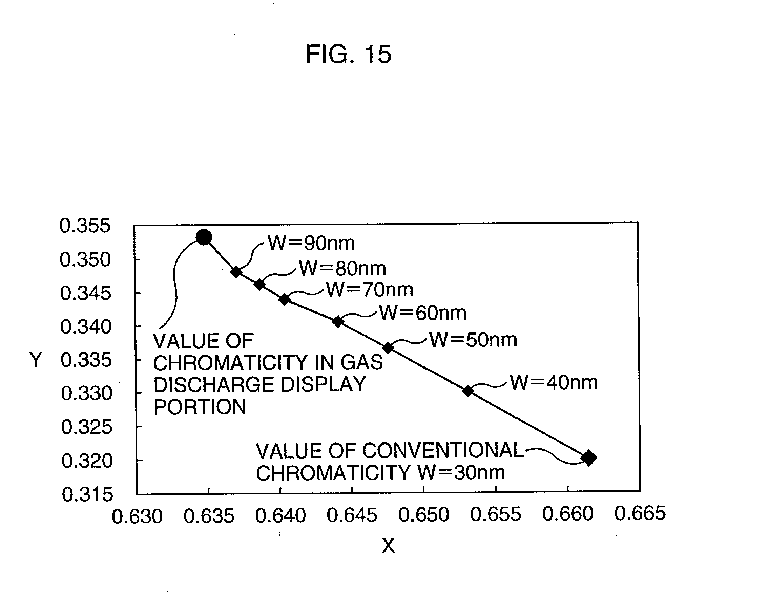

Fig. 15 is a characteristic chart showing a relationship between the region width for absorption and red chromaticity when only the red phosphors emit light in the gas discharge display portion of the gas discharge display device.

Here, the transmission characteristic of the optical film is a transmission characteristic that the region width W for absorption is selectively changed. The color reproducibility is improved by cutting a peak of the wavelength region of 580 nm to 600 nm radiated from the gas discharge display device side. Fig. 15 tells that the color reproduction range is increased when the region width W for absorption is small.

As describe above, From Fig. 13, Fig. 14, and Fig. 15, in the case that the light-emitting intensity in the gas discharge display device is constant and that an average transmission characteristic of the visible light region is the same, in order to increase the brightness (luminance) and the contrast ratio of the gas discharge display device while maintaining the color reproduction range broadly, it is the most appropriate when the region width absorbed by the optical film is 50 nm or more and 70 nm or less having a center at 585 nm.

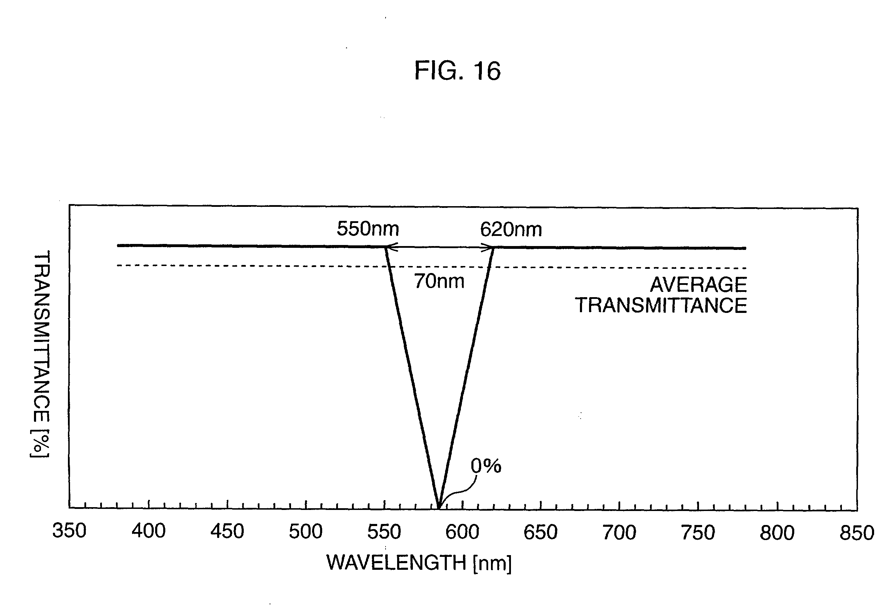

Fig. 16 is a characteristic chart showing an example (characteristic 5) of a transmission characteristic of the optical film according to the present embodiment.

The characteristic 5 has such characteristics that a selectively absorbing range is from 550 nm to 620 nm of wavelength, that a region width for absorption is 70 nm, that the absorption peak is at 585 nm, and that a ratio TPR $((T_P / T_V) \times 100 \, (\%))$ of the transmittance $T_P$ at the absorption peak to the average transmittance $T_V$ in the visible light region is 0%.

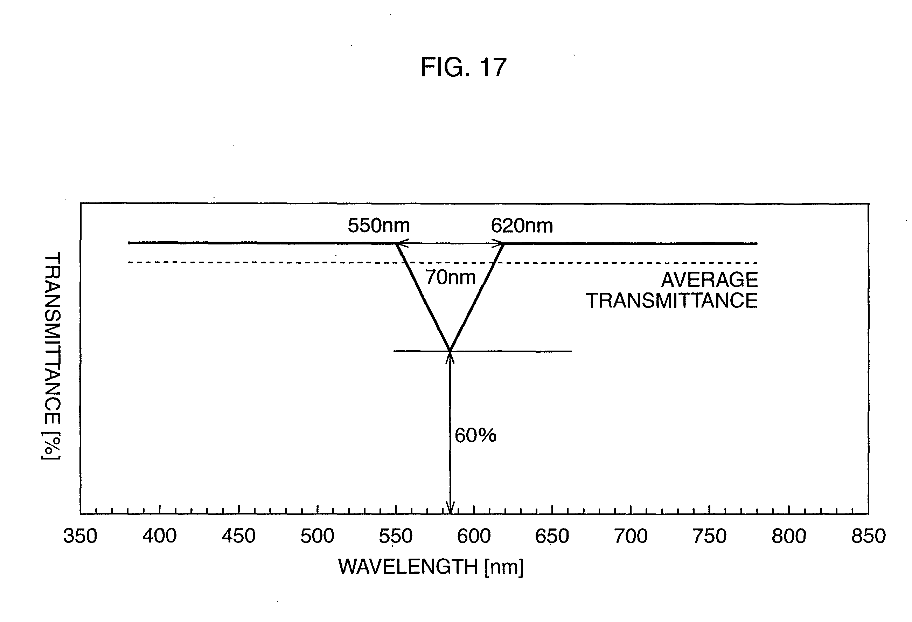

Fig. 17 is a characteristic chart showing an example (characteristic 6) of a transmission characteristic of the optical film according to the present embodiment.

The characteristic 6 has such characteristics that it has the same selectively absorbing region, a width of absorption, and a wavelength of the absorption peak as the characteristic 5 does, and that the ratio TPR of the transmittance $T_P$ at the absorption peak to the average transmittance $T_V$ in the visible light region is 60%.

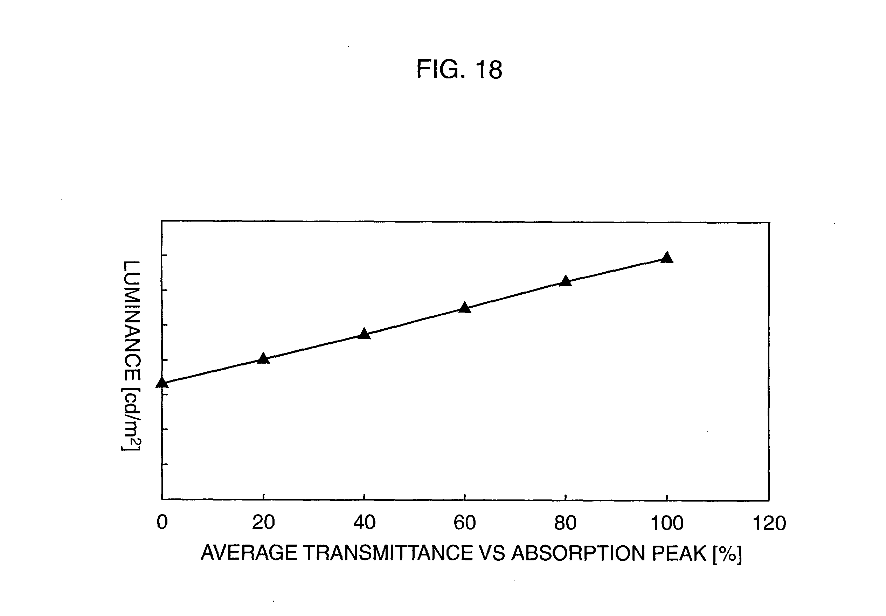

Fig. 18 is a characteristic chart showing a relationship between a ratio $(T_P / T_V)$ of the transmittance $T_P$ at the absorption peak to the average transmittance $T_V$ in the visible light region and luminance in which brightness of the gas discharge display device is compared.

Here, as shown in the characteristics 5 and 6, a relationship between a case when the ratio TPR of the transmittance Tp at the absorption peak to the average transmittance $T_V$ in the visible light region is changed and the luminance of the gas discharge display device is shown when the selectively absorbing range is from 550 nm to 620 nm of wavelength, when the region width for absorption is 70 nm, and when the absorption peak is at 585 nm. Fig. 18 tells that the larger the TPR is, the larger the brightness of the gas discharge display device is.

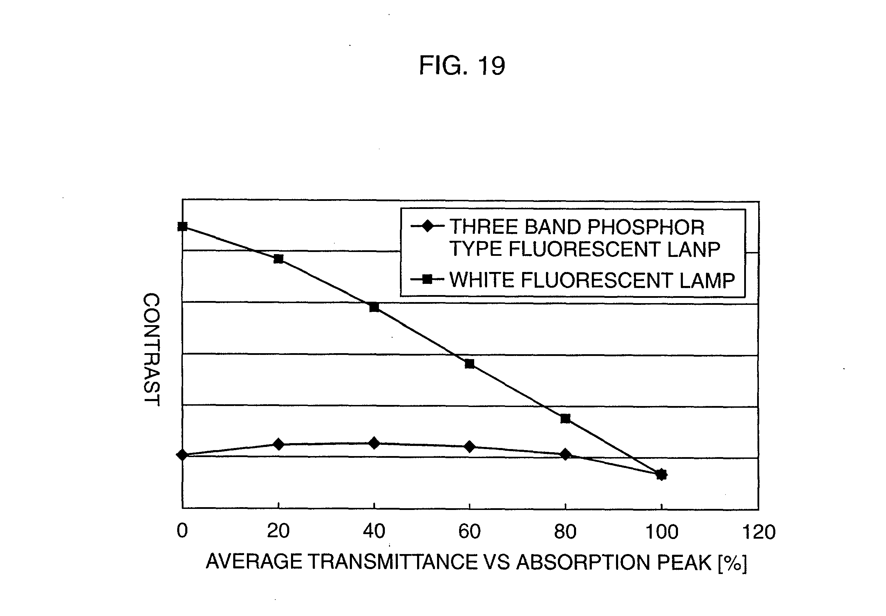

Fig. 19 is a characteristic chart showing a relationship between a ratio $(T_P / T_V)$ of the transmittance $T_P$ at the absorption peak to the average transmittance $T_V$ in the visible light region and the contrast ratio in which the contrast ratio of the gas discharge display device is compared.

Here, as shown in the transmission characteristics 5 and 6, a relationship between the case when the ratio TPR of the transmittance $T_P$ at the absorption peak to the average transmittance $T_V$ in the visible light region is changed and the contrast ratio of the gas discharge display device is shown when the gas discharge display device is irradiated at predetermined illuminance with the three band phosphor type fluorescent lamp and the white fluorescent lamp, when the selectively absorbing range is from 550 nm to 620 nm of wavelength, when the region width for absorption is 70 nm, and when the absorption peak is at 585 nm. In the case of the white fluorescent lamp, when the TPR is large, the contrast ratio is small. In the case of the three band phosphor type fluorescent lamp, the contrast ratio is almost constant when the TPR is between 20% and 60%. The contrast ratio in the vicinity thereof, which is, 0% and 80% thereof, is smaller compared with the contrast ratio between 20% and 60%.

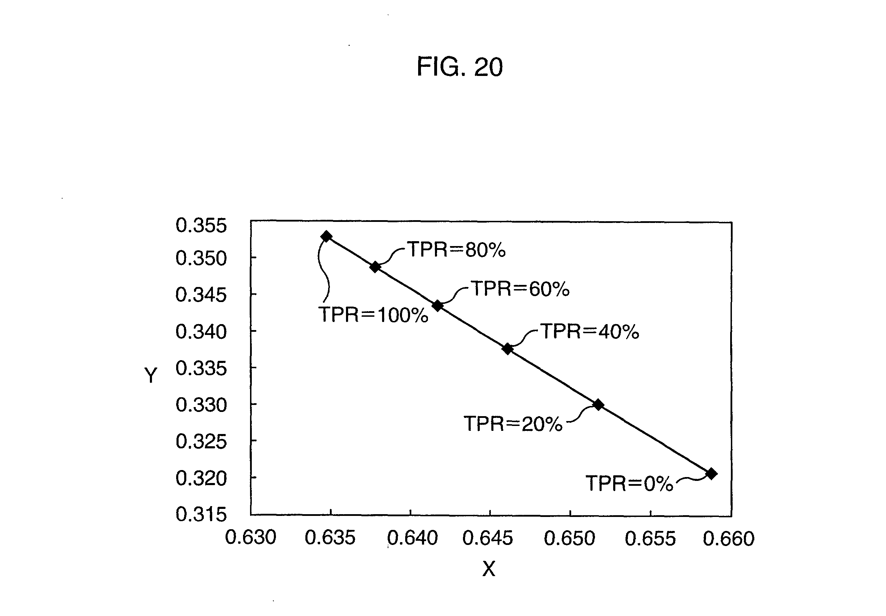

Fig. 20 is a characteristic chart showing a relationship between the ratio $(T_P / T_V)$ of the transmittance $T_P$ at the absorption peak to the average transmittance $T_V$ in the visible light region and red chromaticity when only the red phosphors emit light in the gas discharge display portion of the gas discharge display device.

Here, as shown in the transmission characteristics 5 and 6, a relationship between the case when the ratio TPR of the transmittance $T_P$ at the absorption peak to the average transmittance $T_V$ in the visible light region is changed and red chromaticity . is shown when the selectively absorbing range is from 550 nm to 620 nm of wavelength, when the region width for absorption is 70 nm, and when the absorption peak is at 585 nm. Fig. 20 tells that the lower the ratio TPR of the transmittance $T_P$ at the absorption peak to the average transmittance $T_V$ in the visible light region is, the larger the color reproduction range is.

As described above, from Fig. 18, Fig. 19, and Fig. 20, in the case that the selectively absorbing region, the region width for absorption, and a wavelength of an absorbing peak are the same, and that the transmittance for absorption is changed, in order to increase the color reproduction range, to intensify the brightness of the gas discharge display device, and to increase the contrast ratio under the light source of the white fluorescent lamp and the three band phosphor type fluorescent lamp, the TPR is preferably set within a range from 20% to 60%. Furthermore, an average transmittance, in which the selectively absorbing region to the average transmittance $T_V$ in the visible light region is from 550 nm to 620 nm of wavelength, is from 60% (TPR = 20%) to 85% (TPR = 60%).

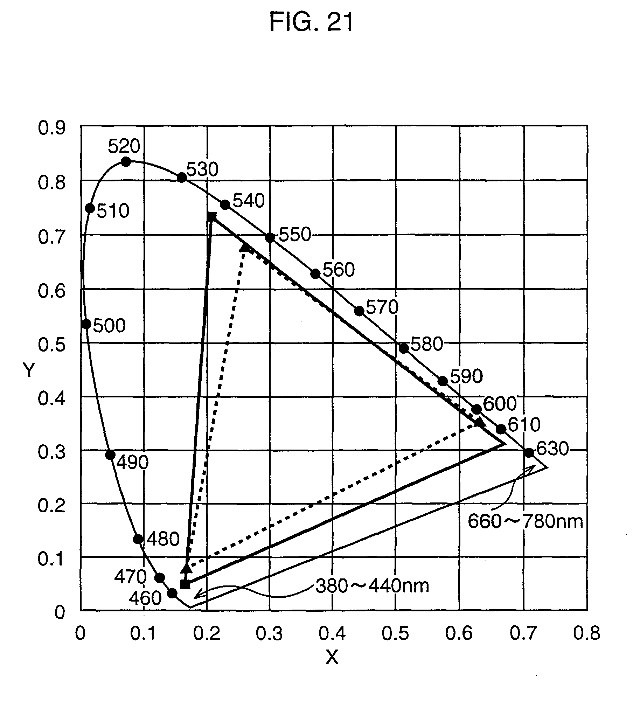

Fig. 21 is a chromaticity diagram showing a color reproduction range corresponding to the transmission characteristic of Fig. 9.

A color reproduction region to which values of chromaticity of blue color, green color and red color emitted by the display portion are connected with a line is shown as a dotted triangle. A color reproduction range with which the optical film according to the present invention is provided on the front surface of the display portion is shown as a solid triangle. Fig. 21 tells that the color reproduction region provided with the optical filter is larger than the color reproduction region emitted by the display portion.

The optical filter having the aforementioned characteristics are obtained by forming a pigment layer which can fully absorb the light at 585 nm of the wavelength on a polyethylene film having a thickness of 200 μm. As the pigment, 1-Ethyl-4-[(1-Ethyl-4(1H)-quinolinylidene)methyl] quinolinium iodide having an absorption peak at 590 nm (Kabushikigaisha Nippon Kankoushikiso Kenkyusho, Product Number NK-6), and 3-Ethyl-2-[3-(1- Ethyl-4(1H)-quinolinylidene)-1-propenyl] benzoxazolium iodide having an absorption peak at 594 nm (Kabushikigaisha Nippon Kankoushikiso Kenkyusho, Product Number NK-741) can be used. The quantities to be added of these pigments and other pigments are adjusted so that desired characteristics can be realized.

According to the gas discharge display device of the present invention, prevention of reflection of the external light by illumination and improvement of the contrast ratio can be realized while increasing the color reproduction range without reducing brightness (luminance).

The present embodiments are to be considered in all respects as illustrative and no restrictive, and all changes which come within the meaning and range of equivalency of the claims are therefore intended to be embraced therein. The invention may be embodied in other specific forms without departing from the essential characteristics thereof.

**Claims**

1. A gas discharge display device, comprising:

   a gas discharge display portion for generating gas discharge by using a gas containing at least either neon or helium, and for displaying a color image by making a first, a second, and a third phosphor having different light-emitting colors emit light; and
   an optical filter portion provided to overlap an entire display screen on a front surface of a gas discharge space, wherein
   said optical filter portion includes an absorption region for selectively absorbing a light between 550 nm of wavelength and 620 nm of wavelength, and a width $W_H$ in the absorption region of a half-width transmittance $T_H$ ($T_H = (T_P + T_V) / 2$) between a transmittance $T_P$ at an absorption peak in the absorption region and an average transmittance $T_V$ in a visible light region is 30 nm or more.

2. The gas discharge display device according to claim 1, wherein
   said optical filter portion is so adjusted that a half-width region width in the transmittance $T_{550}$ at the wavelength of 550 nm and the transmittance $T_{620}$ at the wavelength of 620 nm is 20 nm or more.

3. The gas discharge display device according to claim 1 or 2, wherein
   said gas discharge display portion has a peak of the wavelength emitted by the first phosphor within a range of 523 nm to 538 nm, and peaks of the wavelengths emitted by the second phosphor within ranges of 589 nm to 595 nm, 607 nm to 613 nm, and 623 nm to 629 nm.

4. The gas discharge display device according to claim 1, 2 or 3, wherein
   said optical filter portion is constituted by including an optical film and a transparent substrate for protecting said gas discharge display portion, being provided on a front surface of the optical film.

5. The gas discharge display device according to claim 4, wherein
   the optical film is provided by tightly cohering with the transparent substrate, and by tightly cohering with said gas discharge display portion.

6. The gas discharge display device according to claim 4, wherein
   the optical film is provided by tightly cohering with the transparent substrate, and by alienating from said gas discharge display portion.

7. The gas discharge display device according to claim 4, wherein
   the optical film is provided by alienating from the transparent substrate, and by tightly cohering with said gas discharge display portion.

8. The gas discharge display device according to claim 4, wherein
   the optical film is made of organic resin in which a substance for absorbing a light of a specific wavelength is dispersed.

9. The gas discharge display device according to any of the preceding claims, wherein
an anti-reflection film is provided on a front surface of said optical filter portion.

10. A gas discharge display device, comprising:

a gas discharge display portion for generating gas discharge by using a gas containing at least either neon or helium, and for displaying a color image by making a first, a second, and a third phosphor having different light-emitting colors emit light; and
an optical filter portion provided to overlap an entire display screen on a front surface of a gas discharge space, wherein
said optical filter portion includes an absorption region for selectively absorbing a light between 550 nm of wavelength and 620 nm of wavelength, and a transmittance Tp at an absorption peak in the absorption region is within a range of 20% to 60% of an average transmittance $T_V$ in a visible light region.

11. The gas discharge display device according to claim 10, wherein
said optical filter portion is so adjusted that a half-width region width in the transmittance $T_{550}$ at the wavelength of 550 nm and the transmittance $T_{620}$ at the wavelength of 620 nm is 20 nm or more.

12. The gas discharge display device according to claim 10 or 11, wherein
said gas discharge display portion has a peak of the wavelength emitted by the first phosphor within a range of 523 nm to 538 nm, and peaks of the wavelengths emitted by the second phosphor within ranges of 589 nm to 595 nm, 607 nm to 613 nm, and 623 nm to 629 nm.

13. The gas discharge display device according to claim 10, 11 or 12, wherein
said optical filter portion is constituted by including an optical film and a transparent substrate for protecting said gas discharge display portion, being provided on a front surface of the optical film.

14. The gas discharge display device according to claim 13, wherein
the optical film is provided by tightly cohering with the transparent substrate, and by tightly cohering with said gas discharge display portion.

15. The gas discharge display device according to claim 13, wherein
the optical film is provided by tightly cohering with the transparent substrate, and by alienating from said gas discharge display portion.

16. The gas discharge display device according to claim 13, wherein
the optical film is provided by alienating from the transparent substrate, and by tightly cohering with said gas discharge display portion.

17. The gas discharge display device according to claim 13, wherein
the optical film is made of organic resin in which a substance for absorbing light of a specific wavelength is dispersed.

18. The gas discharge display device according to any of claims 10 to 17, wherein
an anti-reflection film is provided on a front surface of said optical filter portion.

19. A gas discharge display device, comprising:

a gas discharge display portion for generating gas discharge by using a gas containing at least either neon or helium, and for displaying a color image by making a first, a second, and a third phosphor having different light-emitting colors emit light; and
an optical filter portion provided to overlap an entire display screen on a front surface of a gas discharge space, wherein
said optical filter portion includes an absorption region for selectively absorbing a light between 550 nm of wavelength and 620 nm of wavelength, and an average transmittance $T_{Ac}$ between 550 nm of wavelength and 620 nm of wavelength is within a range of 60% to 85% of an average transmittance $T_V$ in a visible light region.

**20.** The gas discharge display device according to claim 19, wherein
said gas discharge display portion has a peak of the wavelength emitted by the first phosphor within a range of 523 nm to 538 nm, and peaks of the wavelengths emitted by the second phosphor within ranges of 589 nm to 595 nm, 607 nm to 613 nm, and 623 nm to 629 nm.

**21.** The gas discharge display device according to claim 19 or 20, wherein
said optical filter portion is constituted by including an optical film and a transparent substrate for protecting said gas discharge display portion, being provided on a front surface of the optical film.

**22.** The gas discharge display device according to claim 21, wherein
the optical film is provided by tightly cohering with the transparent substrate, and by tightly cohering with said gas discharge display portion.

**23.** The gas discharge display device according to claim 21, wherein
the optical film is provided by tightly cohering with the transparent substrate, and by alienating from said gas discharge display portion.

**24.** The gas discharge display device according to claim 21, wherein
the optical film is provided by alienating from the transparent substrate, and by tightly cohering with said gas discharge display portion.

**25.** The gas discharge display device according to claim 21, wherein
the optical film is made of organic resin in which a substance for absorbing light of a specific wavelength is dispersed.

**26.** The gas discharge display device according to any of claims 19 to 25, wherein
an anti-reflection film is provided on a front surface of said optical filter portion.

FIG. 1

# FIG. 2A

<u>100a</u>

$101 \begin{cases} 101a \\ 101b \end{cases}$

$\begin{rcases} 102a \\ 102b \end{rcases} 102$

103

# FIG. 2B

<u>100b</u>

$101 \begin{cases} 101a \\ 101b \end{cases}$

$\begin{rcases} 102a \\ 102b \end{rcases} 102$

103

EP 1 398 813 A2

FIG. 3

FIG. 4

FIG. 5

LIGHT-EMITTING INTENSITY

WAVELENGTH [nm]

FIG. 6

WAVELENGTH [nm]

LIGHT-EMITTING INTENSITY

FIG. 7

FIG. 8

EP 1 398 813 A2

# FIG. 9

EP 1 398 813 A2

FIG. 10

# FIG. 11

FIG. 12

FIG. 13

FIG. 14

## FIG. 15

EP 1 398 813 A2

# FIG. 16

# FIG. 17

EP 1 398 813 A2

FIG. 18

FIG. 19

EP 1 398 813 A2

FIG. 20

EP 1 398 813 A2

## FIG. 21